# EUROPEAN PATENT APPLICATION

(11) **EP 2 911 288 A1**
(43) Date of publication of application: **26.08.2015**
(21) Application number: 14155964.1
(22) Date of filing: 20.02.2014
(51) Int. Cl.: H02P 6/08, H02P 25/02

(54) **Separately excited synchronous machine with excitation supplied from dc-link of stator inverter**

(71) Applicant: ABB Technology AG, 8050 Zürich (CH)
(72) Inventor: Dujic, Drazen, 1094, Paudex (CH); Wahlstroem, Jonas, 5213 Villnachern (CH)
(74) Representative: ABB Patent Attorneys

(57) **Abstract**

The present invention relates to a medium-voltage converter arrangement (2, 51) for driving an electrical machine (3) with a field winding (4) for excitation, comprising:
- a rectifier unit (23) for providing an intermediate DC link voltage at a DC link (24);
- an inverter unit (26) connected to the DC link (24) for providing an AC waveform output to feed a stator winding of the electrical machine (3); and
- an excitation unit (28) connected to the DC link (24) and converting a DC link voltage to an excitation voltage to be applied to the field winding (4) of the electrical machine (3).

## Description

### Technical field

The present invention relates to systems for powering electrical drives with MV power, particularly for driving electrical machines requiring an excitation of field windings. The present invention further relates to configurations of systems for powering electrical drives.

### Prior art

Systems for driving electrical machines which require an excitation of field windings on the rotor and are powered by a medium-voltage power supply usually require two separated and independent power supplies. A medium-voltage (MV) power supply serves to supply power to an input of a converter that converts power to be suitable for supplying the stator windings of electrical machines. A separated low-voltage (LV) excitation power supply provides power to an excitation converter that feeds the field winding on the rotor of the electrical machine.

In medium-voltage configurations, the excitation converter is usually not an integral part of the system, but a separate assembly that can be added to the final line-up or delivered as a separate module or unit. Conventionally, the MV power is supplied as AC power, wherein the converter converts the MV AC power to an intermediate DC link which is coupled to an inverter which drives the stator windings of the electrical machine according to a controlled operation scheme. Additionally, field windings of electrical machines are supplied by a separate AC power supply which is converted by a separate excitation converter to provide the excitation power.

Depending on the type of excitation, the excitation converter may be supplied with a low-voltage AC power for being rectified to a DC power which is fed directly to the field winding of the rotor of the electrical machine. In other configurations, a brushless excitation of the field winding of the rotor may also be provided. Here, the input LV AC voltage is firstly supplied to an exciter machine, the rotor of which is firmly attached to the rotor shaft of the electrical machine and has a diode bridge connected thereto. The exciter machine may correspond of a phase angle-controlled AC/AC converter for feeding the stator winding of the exciter machine. The diode bridge rectified voltage/current is applied to the field winding of the electrical machine.

Document CN 102064711 A discloses a system for driving an electrical machine which has an AC/DC converter for converting supplied AC power to a DC link. The DC link is coupled to the electrical machine via a boost chopper unit and a rectifier unit. For excitation, the DC link is further coupled to the electrical machine via an excitation unit, wherein the excitation unit comprises a buck chopper unit.

Document WO 2013/000632 A2 discloses a field winding of an electrical machine that is supplied with a field winding current via a field winding converter. Stator windings are supplied with AC power by a corresponding stator inverter. Stator inverter and field winding converter are powered by a common DC supply. The above approaches cannot be applied for systems with medium voltage power supply for providing a medium power level to electrical machines. Conventionally, separate excitation converters supplied by a separate power supply are commonly used in these approaches. In addition, circuit breakers and transformers for protection, galvanic insulation and voltage adaptation are needed, which adds to the footprint and costs of the overall system and increases the need for additional control interfaces.

### Summary of the invention

It is an object of the present invention to provide a system for driving a medium-voltage drive which requires less components and no additional power supply arrangement for the excitation via the field winding. It is a further object of the present invention to provide a more integrated concept for the system for operating the medium-voltage drive and to allow for a better coordination between an inverter unit for powering the stator windings and an excitation unit for powering the field winding.

The above objects have been achieved by the medium-voltage converter arrangement for operating an electrical machine having a separate excitation according to claim 1 and the medium-voltage drive system according to the further independent claim.

Further embodiments are indicated in the depending subclaims.

According to a first aspect, a medium-voltage converter arrangement for driving an electrical machine with a field winding for excitation is provided, comprising:
- at least one rectifier unit for providing an intermediate DC link voltage at a DC link;
- at least one inverter unit connected to the DC link for providing an AC waveform output to feed a stator winding of the electrical machines; and
- at least one excitation unit connected to the DC link for converting a DC link voltage to an excitation voltage to be applied to the field winding of the electrical machines.

One idea of the present invention is to provide a medium-voltage converter arrangement for driving a medium-voltage electrical machine having a separate excitation, wherein the excitation unit is powered by a DC link of a converter unit. This substantially allows for powering both the converter unit and the excitation unit by a common medium-voltage power supply.

Hence, the installation footprint can be significantly reduced as the medium-voltage converter arrangement requires less additional equipment. Furthermore, the robustness of the medium-voltage converter arrangement can be increased. Due to the common supply of the inverter of the converter unit and the excitation unit via the DC link, a better coordination of control actions can be achieved. Compared to conventional approaches, the excitation unit is supplied via a medium-voltage DC supply of the DC link, so that the voltage margin for the excitation conversion can be increased.

Furthermore, the DC link may be provided with one or more energy storages, in particular with capacitors.

It may be provided that the excitation unit includes a DC/DC converter for providing a voltage conversion and for providing a direct excitation of the field winding.

Alternatively, the excitation unit may include a DC/AC converter for a brushless excitation of the field winding.

Moreover, an exciter machine may be coupled to a rotor of the electrical machine and powered by stator windings, so that voltage is induced in the exciter machine and rectified by a diode rectifier before being applied to the field winding.

The rectifier unit, the inverter unit, the DC link and the excitation unit may be included in one or more separated modules.

According to a further aspect, a medium-voltage drive system is provided, comprising:
- one or more electrical machines having a stator winding and a field winding; and
- the above converter arrangement.

The electrical machine may be a medium-voltage electrical machine, wherein the stator winding is supplied by a medium-voltage AC waveform and the field winding is powered by a medium or low voltage.

It may be provided that a converter arrangement has a number of rectifier units connected in parallel to provide the DC link voltage, a number of inverter units connected in parallel to the DC link and a number of exciter units connected in parallel to the DC link, wherein the number of inverter units and the number of exciter units corresponds to the number of electrical machines having field windings.

### Brief description of the drawings

Embodiments of the present invention are described in more detail in conjunction with the accompanying drawings, in which:
- Figure 1: shows a medium-voltage converter arrangement for a medium-voltage drive system with an integrated excitation unit; and
- Figure 2: shows a medium-voltage drive system for multiple motors each being driven by an inverter unit and excitation unit coupled via a common DC link of the converter arrangement.

### Detailed description of embodiments

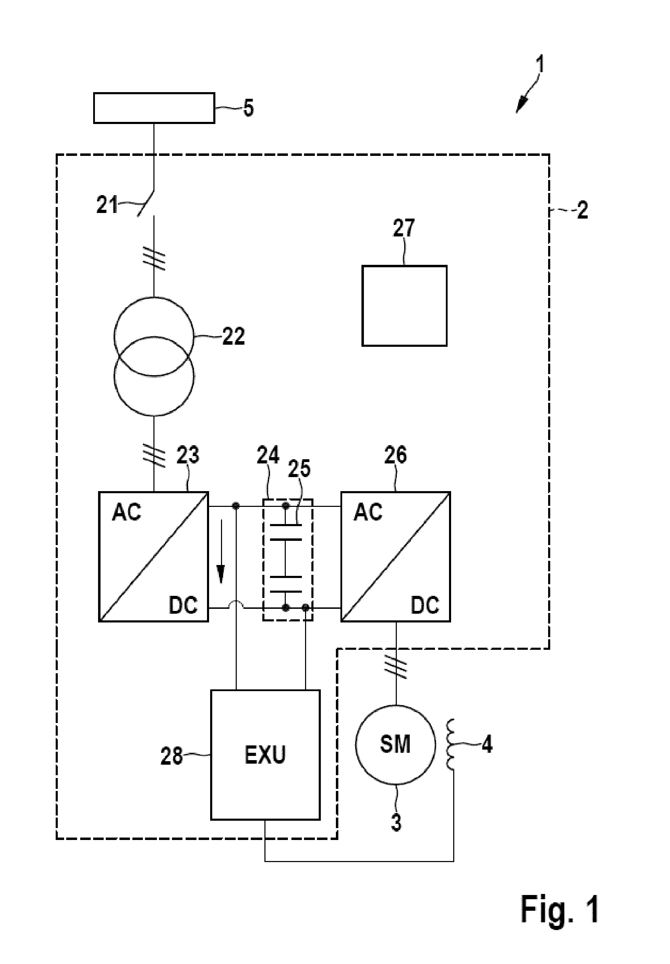

Figure 1 shows a medium-voltage drive system 1 having a medium-voltage converter system 2 for driving an electrical machine 3.

The electrical machine 3 may be provided as a synchronous motor with a controlled, controllable or variable excitation which can be set or obtained by means of a field winding 4. The field winding 4 can be electrically powered either directly or in a brushless manner, as is known in the art. The field winding 4 is part of or coupled to a rotor (not shown) of the electrical machine 3 and serves to provide a magnetic excitation field in the electrical machine 3.

The medium-voltage converter arrangement 2 comprises a main control switch 21 to couple the medium-voltage converter arrangement 2 to or to decouple it from a medium-voltage AC power source 5. The medium-voltage power source 5 may be provided by a common electrical supply grid, a power generator or the like. Medium voltage defines a voltage range of between 1000 V - 69 kV.

When the converter arrangement 2 is coupled to the medium-voltage AC power source 5, the medium-voltage AC power is firstly supplied to a transformer 22 to provide galvanic insulation and the transformation of voltage levels for the input of a rectifier 23. The rectifier 23 can be active or passive and is configured to transform the incoming transformed AC voltage U_{ACin} to an intermediate DC link voltage U_{DC} which is provided at the DC link 24.

The DC link 24 is provided with one or more capacitors 25 to further feed the intermediate DC link power to an inverter unit 26 to transform the intermediate DC link voltage U_{DC} from the DC link 24 to a corresponding AC waveform according to a control scheme provided by a control unit 27. The AC waveform output of the inverter unit 26 is connected to the stator winding of the electrical machine 3.

In order to power the field winding 4 located on the rotor of the electrical machine 3, an input of an excitation unit 28 is connected with the DC link 24. In this manner, both the inverter unit 26 and the excitation unit 28 are supplied by the same intermediate voltage source at their inputs. The intermediate voltage source is the intermediate DC link 24 of the converter assembly formed by the rectifier unit 23 and the inverter unit 26.

Due to the supply provided locally from the DC link 24, the converter arrangement 2 requires less additional equipment, such as breakers and transformers. Hence, the overall footprint can be reduced. The installation effort can also be significantly reduced, since the converter arrangement 2 is essentially placed between a single medium-voltage AC power supply and the electrical machine 3. The excitation unit 28 can be provided as an integral part of the converter arrangement 2.

The rectifier unit 23, the DC link 24, the inverter unit 26, the excitation unit 28 and the control unit 27 can be either physically separated in one or more modules or combined in one or more single modules.

The excitation unit 28 may be configured as a DC/DC converter for direct excitation, so that the converted DC excitation voltage can be directly applied to the field winding 4. The DC/DC converter may be configured to convert the DC voltage to a different level of the excitation voltage. The DC excitation voltage can be a medium or low voltage.

In case of a brushless excitation of the field winding 4, the excitation unit 28 may be configured as a DC/AC converter, may provide an AC voltage to be applied to the stator winding of an exciter machine (not shown) located on the shaft of the rotor of the exciter machine and may further supply the field winding 4 from the rotating diode rectifier attached to the rotor of the exciter machine.

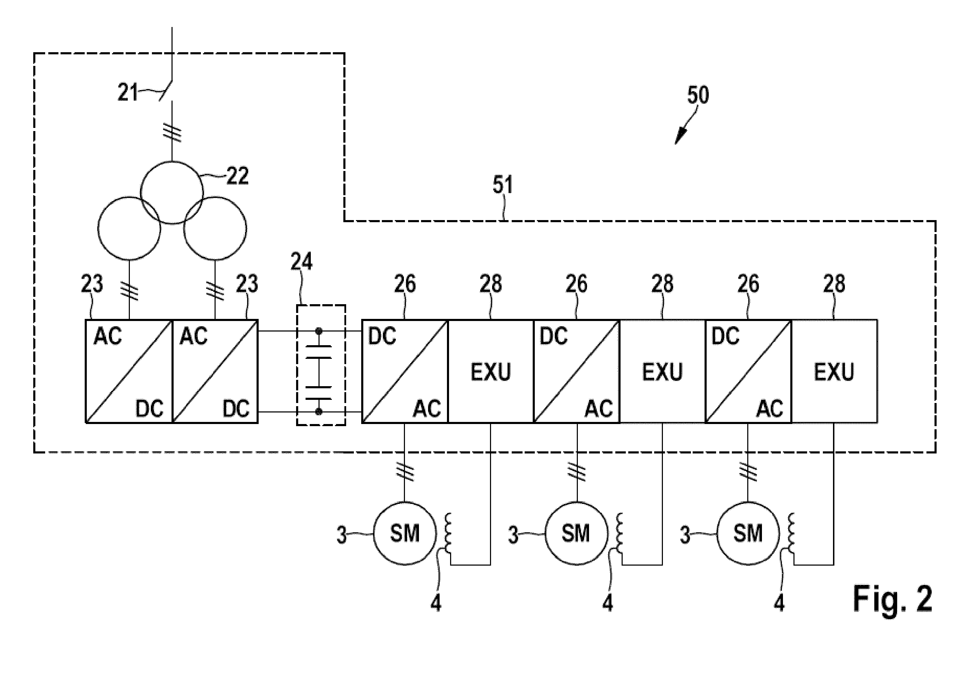

In Figure 2, a medium-voltage drive system 50 is shown for driving multiple electrical machines 3 each provided with a respective field winding 4. A further converter arrangement 51 has a number of rectifier units 23 which are supplied by a respective transformer 22 via the main control switch 21. The rectifier units 23 are coupled in parallel to a DC link 24 to provide the DC link voltage. A DC link voltage U_{DC} is coupled in parallel to a number of inverter units 26 and in parallel to a number of excitation units 28 to provide the AC waveform to be supplied to the stator winding of the electrical machine 3 and the excitation voltage for the field winding 4 of the respective electrical machine 3.

### Reference list

- 1: medium-voltage drive system
- 2: converter arrangement
- 3: electrical machine
- 4: field winding
- 5: main power source
- 21: main control switch
- 22: transformer
- 23: rectifier unit
- 24: DC link
- 25: DC link capacitor
- 26: inverter unit
- 27: control unit
- 28: excitation unit
- 50: further medium voltage drive system
- 51: further converter arrangement

## Claims

1. A medium-voltage converter arrangement (2, 51) for driving an electrical machine (3) with a field winding (4) for excitation, comprising:
- at least one rectifier unit (23) for providing an intermediate DC link voltage at a DC link (24);
- at least one inverter unit (26) connected to the DC link (24) for providing an AC waveform output to feed a stator winding of the electrical machine (3); and
- at least one excitation unit (28) connected to the DC link (24) and converting a DC link voltage to an excitation voltage to be applied to the field winding (4) of the electrical machine (3).

2. The medium-voltage converter arrangement (2, 51) according to claim 1, wherein the DC link (24) is provided with one or more energy storages, in particular with capacitors (25).

3. The medium-voltage converter arrangement (2, 51) according to claim 1 or 2, wherein the excitation unit (28) includes a DC/DC converter for a direct excitation of the field winding (4).

4. The medium-voltage converter arrangement (2, 51) according to claim 1 or 2, wherein the excitation unit (28) includes a DC/AC converter for a brushless excitation of the field winding (4).

5. The medium-voltage converter arrangement (2, 51) according to claim 4, wherein an exciter machine is coupled to a rotor of the electrical machine (3) and powered by stator windings, so that voltage is induced in the exciter machine and rectified by a diode rectifier before being applied to the field winding (4).

6. The medium-voltage converter arrangement (2, 51) according to any one of claims 1 to 5, wherein the rectifier unit (23), the inverter unit (26), the DC link (24) and the excitation unit (28) are included in one or more separated modules.

7. Drive system (1, 50), comprising:
- one or more electrical machines (3) having a stator winding and a field winding (4); and
- a converter arrangement (2, 51) according to any one of claims 1 to 6.

8. Drive system (1, 50) according to claim 7, wherein the electrical machine (3) is a medium-voltage electrical machine (3), wherein the stator winding is powered by a medium-voltage AC waveform and the field winding (4) is powered by a medium or low voltage.

9. Drive system (1, 50) according to claim 7 or 8, wherein the converter arrangement (2, 51) has a number of rectifier units (23) connected in parallel to provide the DC link voltage, a number of inverter units (26) connected in parallel to the DC link (24) and a number of exciter units connected in parallel to the DC link (24), wherein the number of inverter units (26) and the number of exciter units corresponds to the number of electrical machines (3) having field windings (4).
